# EUROPEAN PATENT SPECIFICATION

(11) **EP 1 592 193 B1**
(45) Date of publication and mention of the grant of the patent: **24.12.2008**
(21) Application number: 04252500.6
(22) Date of filing: 30.04.2004
(51) Int. Cl.: H04L 29/06

(54) **Wireless communication device with securely added randomness and related method**
Drahtlose Kommunikationsvorrichtung mit sicher addiertem Zufallscharakter und entsprechendes Verfahren
Dispositif sans fil de communication avec caractère aléatoire sécurisée ajoutée et procédé correspondant

(43) Date of publication of application: 02.11.2005
(73) Proprietor: Research In Motion Limited, Waterloo, Ontario N2L 3W8 (CA)
(72) Inventor: Brown, Michael K., Kitchener, Ontario N2M 2Z2 (CA); Brown, Michael S., Waterloo, Ontario N2K 4B1 (CA); Little, Herbert A., Waterloo, Ontario N2T 2V8 (CA)
(74) Representative: Hibbert, Juliet Jane Grace

(56) References cited:
- WO-A-01/93528
- US-A- 5 794 139
- US-A- 2003 128 843

## Description

### BACKGROUND OF THE INVENTION

### Field of the Invention

This invention generally relates to wireless communication systems including a wireless communication device having cryptographic functions requiring random data inputs (e.g., to generate cryptographic keys, certificates and the like).

### Related Art

Well known cryptographic processes (e.g., for generating cryptographic keys, certificates and the like) often require a random data input from time to time. There are many known forms of software and hardware random number generators that may be used and many of them depend upon input of a random "seed" data.

Initializing random seed data may be supplied during manufacture or may be provided subsequently by a desired known technique. However, for various reasons, it is possible that the randomness of data in the random seed may be less than desirable. For example, when a mobile wireless communication device is provisioned for the first time at the factory, it may leave the factory with a random seed that is not entirely random with respect to other devices manufactured and provisioned at approximately the same time. Furthermore, for various reasons it is sometimes necessary (or at least desirable) to "wipe" all stored data (including the stored random seed data) from the device memory. This may happen, for example, when updating software, recovering from abnormal conditions - or merely for enhanced security purposes subsequent to some period of uncontrolled access to the device. For example, it is conceivable that if an unauthorized entity gains access to the device, then information might be ascertainable that relates to the content of a stored random seed and thus possibly make future cryptographic communication sessions vulnerable to unauthorized decryption. In other words, the device may pass out of possession of the authorized user (either intentionally or

unintentionally) and thus become an untrusted device - unless suitable randomness can be restored to the random seed data stored in the device.

Accordingly, there is a needed ability to securely add randomness to a wireless communication device within a wireless communication system.

WO 01/93528 (Girard) and US 5,794,139 (Mizikovsky et al) disclose systems which implement periodic authentication procedures for wireless communication devices wherein a random number is securely downloaded, processed cryptographically using unique identifying data for that particular device and a result is then transmitted back to a central controlling site which can thereby check the authenticity of that device in the network; that is, whether the device is authorised to operate in the network. US-A-20030128843 discloses a system wherein a random number pool stored in a memory is restored from backed up data when a power loss has caused loss of memory.

### BRIEF SUMMARY OF THE INVENTION

For reasons such as those noted above, we have recognized that it would be advantageous to permit new randomness to be securely added to a wireless communication device within a wireless communication system.

The invention is defined in the independent claims. Optional features of the invention are defined in the dependent claims.

### BRIEF DESCRIPTION OF THE DRAWINGS

These and other objects and advantages of this invention will be better understood and appreciated in conjunction with the following detailed description of exemplary embodiments taken together with the accompanying drawings, of which:
FIG. 1 is an overall system wide schematic view of an exemplary wireless communication system incorporating a mobile wireless communication device with securely added randomness in accordance with one exemplary embodiment of this invention;
FIG. 2 is an abbreviated schematic diagram of hardware included within an exemplary mobile wireless communication device;
FIG. 3 is an abbreviated schematic functional diagram of the hardware/software utilized to achieve securely added randomness in the exemplary embodiment of FIG. 1;
FIG. 4 is an exemplary abbreviated schematic flow diagram of computer software (i.e., program logic) that may be utilized in the user's base unit in the exemplary embodiment of FIG. 1 so as to provide additional randomness for transmission to the mobile wireless communication device; and
FIG. 5 is an exemplary abbreviated schematic flow diagram of computer software (i.e., program logic) that may be utilized in the mobile wireless communication device of FIG. 1 to accept securely presented added randomness and store it in a maintained random pool database to thereby enhance subsequent cryptographic functions of the device in the exemplary embodiment.

### DETAILED DESCRIPTION OF THE INVENTION

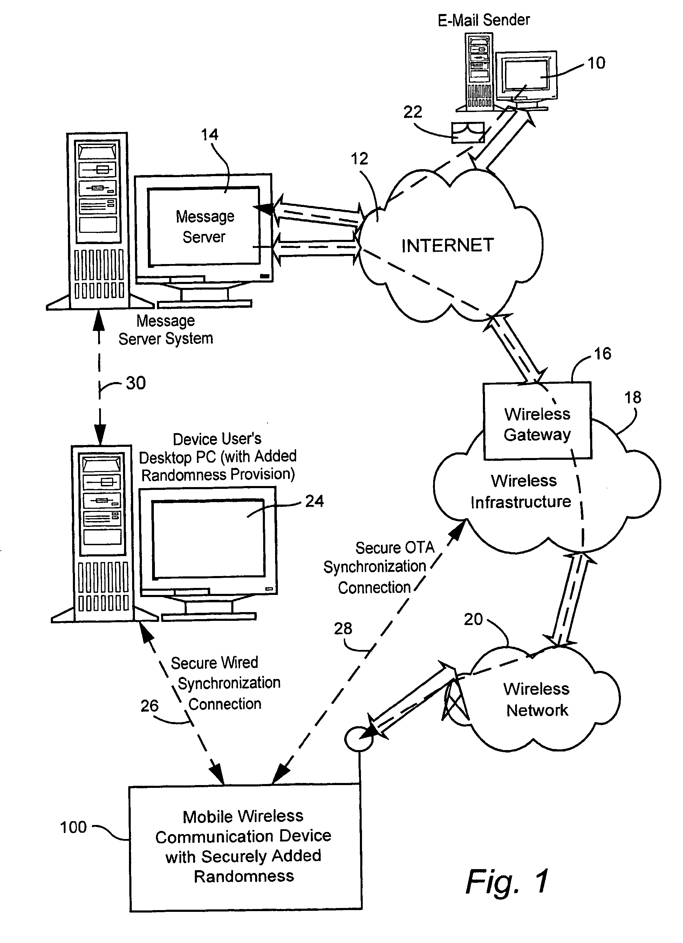

FIG. 1 is an overview of an exemplary communication system in which a wireless communication device 100 may be used in accordance with this invention. One skilled in the art will appreciate that there may be hundreds of different system topologies. There may also be many message senders and recipients. The simple exemplary system shown in FIG. 1 is for illustrative purposes only, and shows perhaps the currently most prevalent Internet e-mail environment.

FIG. 1 shows an e-mail sender 10, the Internet 12, a message server system 14, a wireless gateway 16, wireless infrastructure 18, a wireless network 20 and a mobile communication device 100.

An e-mail sender 10 may, for example, be connected to an ISP (Internet Service Provider) on which a user of the system has an account, located within a company, possibly connected to a local area network (LAN), and connected to the Internet 12, or connected to the Internet 12 through a large ASP (application service provider) such as America Online™ (AOL). Those skilled in the art will appreciate that the systems shown in FIG. 1 may instead by connected to a wide area network (WAN) other than the Internet, although e-mail transfers are commonly accomplished through Internet-connected arrangements as shown in FIG. 1.

The message server 14 may be implemented, for example, on a network computer within the firewall of a corporation, a computer within an ISP or ASP system or the like, and acts as the main interface for e-mail exchange over the Internet 12. Although other messaging systems might not require a message server system 14, a mobile device 100 configured for receiving and possibly sending e-mail will normally be associated with an account on a message server. Perhaps the two most common message servers are Microsoft Exchange™ and Lotus Domino™. These products are often used in conjunction with Internet mail routers that route and deliver mail. These intermediate components are not shown in FIG. 1, as they do not directly play a role in the invention described below. Message servers such as server 14 typically extend beyond just e-mail sending and receiving; they also include dynamic database storage engines that have predefined database formats for data like calendars, to-do lists, task lists, e-mail and documentation.

The wireless gateway 16 and infrastructure 18 provide a link between the Internet 12 and wireless network 20. The wireless infrastructure 18 determines the most likely network for locating a given user and tracks the users as they roam between countries or networks. A message is then delivered to the mobile device 100 via wireless transmission, typically at a radio frequency (RF), from a base station in the wireless network 20 to the mobile device 100. The particular network 20 may be virtually any wireless network over which messages may be exchanged with a mobile communication device.

As shown in FIG. 1, a composed e-mail message 22 is sent by the e-mail sender 10, located somewhere on the Internet 12. This message 22 typically uses traditional Simple Mail Transfer Protocol (SMTP), RFC 822 headers and Multipurpose Internet Mail Extension (MIME) body parts to define the format of the mail message. These techniques are all well known to those skilled in the art. The message 22 arrives at the message server 14 and is normally stored in a message store. Most known messaging systems support a so-called "pull" message access scheme, wherein the mobile device 100 must request that stored messages be forwarded by the message server to the mobile device 100. Some systems provide for automatic routing of such messages which are addressed using a specific e-mail address associated with the mobile device 100. In a preferred embodiment, messages addressed to a message server account associated with a host system such as a home computer or office computer base unit 24 which belongs to the user of a mobile device 100 are redirected from the message server 14 to the mobile device 100 as they are received. As will be explained below, the user's base system (e.g., a desktop PC) includes added randomness provisions (i.e., stored program logic) in the exemplary embodiment.

Regardless of the specific mechanism controlling forwarding of messages to mobile device 100, the message 22, or possibly a translated or reformatted version thereof, is sent to wireless gateway 16. The wireless infrastructure 18 includes a series of connections to wireless network 20. These connections could be Integrated Services Digital Network (ISDN), Frame Relay or T1 connections using the TCP/IP protocol used throughout the Internet. As used herein, the term "wireless network" is intended to include three different types of networks, those being (1) data-centric wireless networks, (2) voice-centric wireless networks and (3) dual-mode networks that can support both voice and data communications over the same physical base stations. Combined dual-mode networks include, but are not limited to, (1) Code Division Multiple Access (CDMA) networks, (2) the Group Special Mobile or the Global System for Mobile Communications (GSM) and the General Packet Radio Service (GPRS) networks, and (3) future third-generation (3G) networks like Enhanced Data-rates for Global Evolution (EDGE) and Universal Mobile Telecommunications Systems (UMTS). Some older examples of data-centric network include the Mobitex™ Radio Network and the Data TAC™ Radio Network. Examples of older voice-centric data networks include Personal Communication Systems (PCS) networks like GSM, and TDMA systems.

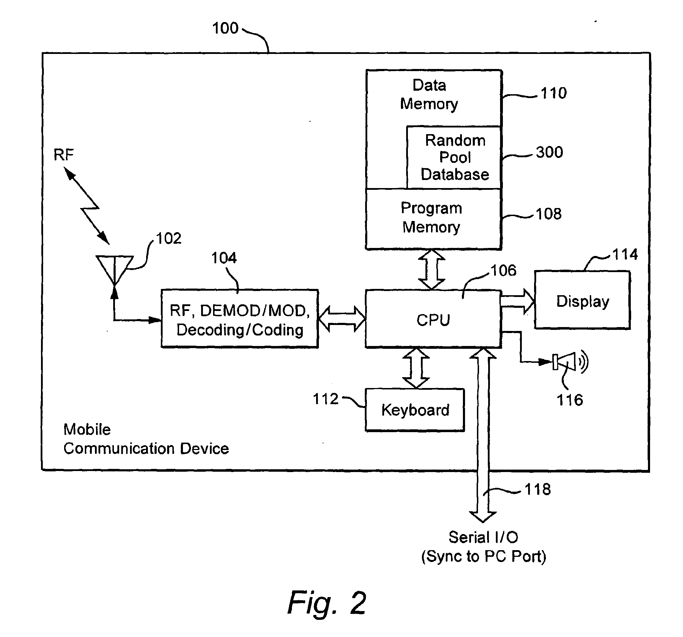

As depicted in FIG. 2, mobile communication device 100 includes a suitable RF antenna 102 for wireless communication to/from wireless network 20. Conventional RF, demodulation/modulation and decoding/coding circuits 104 are provided. As those in the art will appreciate, such circuits can involve possibly many digital signal processors (DSPs), microprocessors, filters, analog and digital circuits and the like. However, since such circuitry is well known in the art, it is not further described.

The mobile communication device 100 will also typically include a main control CPU 106 which operates under control of a stored program in program memory 108 (and which has access to data memory 110). CPU 106 also communicates with a conventional keyboard 112, display 114 (e.g., an LCD) and audio transducer or speaker 116. A portion of data memory 300 is available for storing a random pool of data. Suitable computer program executable code is stored in portions of program memory 108 to constitute stored program logic for receiving and using new, added, randomness as described below (e.g.; via a wired serial I/O port 118 or the wireless RF antenna 102).

As depicted in FIG. 1, a secure wired synchronization connection 26 (e.g., between serial I/O ports of the user's base unit 24 and the wireless device 100) is typically provided for normal data synchronization purposes (e.g., to synchronize databases in the two devices with respect to such things as calendars, to-do lists, task lists, address books, etc.). Part of prior data synchronization processes has included a program logic such as Cert Sync for maintaining synchronization between cryptographic message certificates. If a secure over the air (OTA) synchronization connection 28 is available, it may also be used by Cert Sync to maintain synchronization of cryptographic message certificates.

As previously described, there is a communication link (e.g., depicted in dotted lines at 30 in FIG. 1) typically found between the device user's base unit 24 and a system message server 14. Accordingly, there is an existing communication path that may be utilized for passing synchronization data from the user's base unit 24 via channel 30, the server 14, Internet 12, wireless gateway 16 and wireless infrastructure 18 via the over the air (OTA) synchronization connection 28.

The mobile wireless communication device 100 may have less than desired randomness after being provisioned for the first time (e.g., in a manufacturing process where many similar devices are being created and provisioned or after the device memory has been "wiped" either unintentionally or for some intentional reason). However, a lot of security on the device 100 depends on randomness (e.g., to create cryptographic keys, cryptographic certificates and the like).

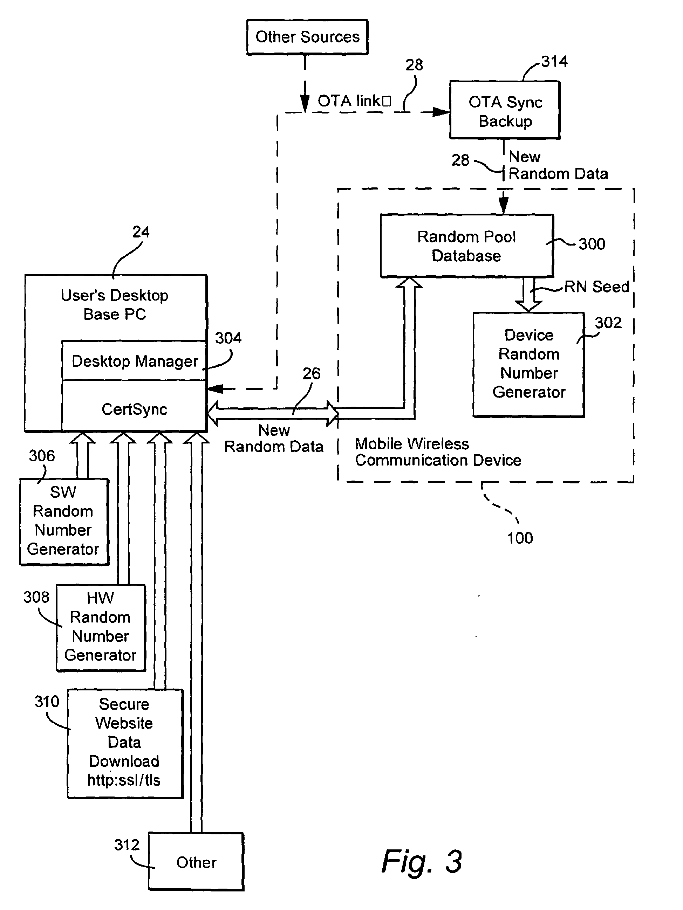

As depicted in FIG. 3, to provide desired additional randomness at any time during the usage of device 100, a "random pool" database 300 has been created. For example, it might comprise a portion of the device data memory in which a string of randomly valued binary bits (e.g., 1024 bits) is stored. This random pool of bits may then be used (entirely or in part or in combination or permutation of parts thereof) to provide random seed data to a conventional device random number generator 302 as needed.

The user's base unit 24 (such as a desktop PC) may be of conventional hardware and operating system design. It will typically include desktop manager program logic 304 (e.g., executable computer program code) for managing, among other things, a normal (i.e., conventional) data synchronization connection to device 100. As previously mentioned, in the environment of mobile wireless communication systems, such a desktop manager may typically include logic for synchronizing cryptographic message certificates. Such logic is denoted here as Cert Sync. In the exemplary embodiment, additional functions of securely providing added randomness during data synchronization to device 100 have been added to the Cert Sync logic. However, as those skilled in the art will appreciate, the program logic to be described below for securely sending added randomness to device 100 may be associated with any desired portion of desktop manager 304 and/or may be provided as an entirely separate self-standing set of program logic (e.g., computer software) if desired.

In the exemplary embodiment, whenever a user synchronizes device 100 with the base unit 24, the Cert Sync logic is configured to also send new random data to device 100 for use in the "random pool" database 300. The device 100 can then use this updated or additionally randomized data to help seed its own random number generator 302.

Cert Sync can generate such new additional random data in multiple ways. For example, the user's base unit 24 may already have its own software random number generator 306. The user's base unit 24 may also have its own hardware random number generator 308 (or a conventional hardware random number generator might be connected to that computer). The user's base unit 24 may also have an Internet connection that provides access to a secure website 310 by downloading random data from that website over secure links (e.g., http:ssl/tls, etc.). Cert Sync logic may also have access to other sources of random data 312.

As a further refinement, device 100 in the exemplary embodiment can "backup" some of its existing randomness via a secure OTA synchronization connection 28. For example, when device 100 performs an OTA backup 314, cryptographic code may add some additional random data to the "random pool" database 300 in the backup file. If the device 100 is subsequently "wiped" (i.e., its memory cleared) for any reason, then upon OTA backup restoration, such previously stored random data (possibly even with additional new data having been added thereto) will be returned to the device 100 and thus help seed the random number generator 302 in a more acceptable and more random fashion after restoration.

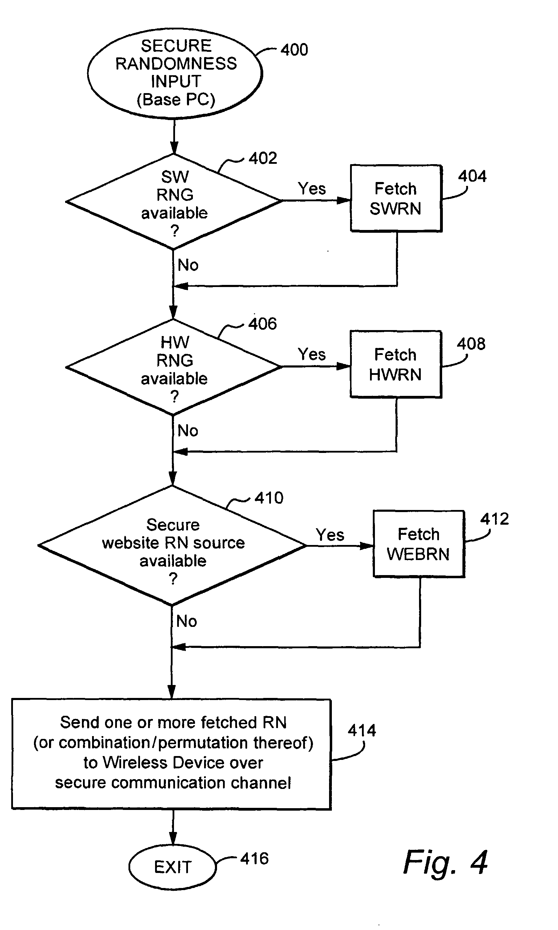

One possible configuration of added program logic for the Cert Sync routine executed in base unit 24 is depicted at FIG. 4. Here, during a part of the Cert Sync logic (not illustrated), transfer will be made to the Secure Randomness Input sub-routine at 400 in FIG. 4. In this sub-routine, base unit 24 may check for accessibility to a software random number generator (RNG) 402. If such is available, then such software generated random number (SWRN) is fetched at 404. A similar test is made at 406 for the availability of a hardware random number generator. If that is available, then a hardware random number (HWRN) is fetched at 408. A further test may be made at 410 for accessibility to a secure website random number source. If such is available, then a web random number (WEBRN) may be fetched at 412. Of course, as those in the art will appreciate, any one or more of these possible sources may be accessed alone or in combination as may be desired. For example, in a currently preferred embodiment, the computer's accessible software random number generator 306 is normally utilized alone without recourse to other possible sources. However, in that presently preferred embodiment, a system administrator is also given the option of setting up the program logic so as to query an accessible identified secure website source of random numbers.

In any event, from whatever source or sources the new random number data is obtained, the base unit logic is configured at 414 so as to send at least one such random number RN (perhaps comprising a combination or permutation of SWRN, HWAN, WEBRN) to the wireless device over a secure communication channel (e.g., the same secure communication channel that is typically used for other data synchronization purposes) before the sub-routine of FIG. 4 is exited at 416 and control is passed back to the main Cert Sync program logic.

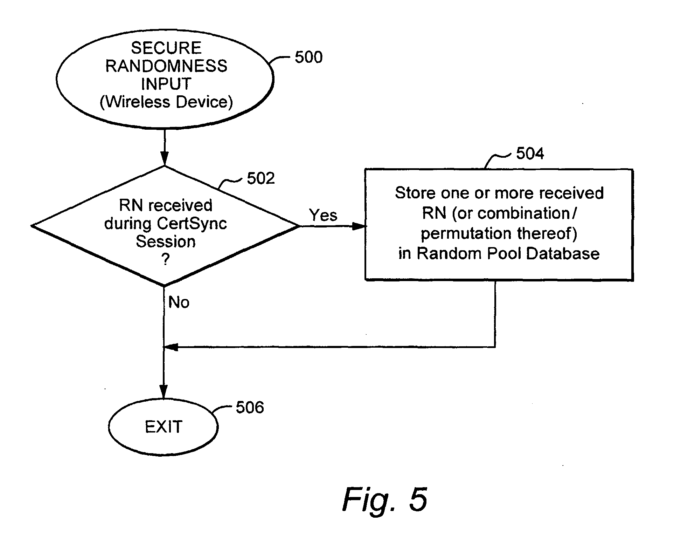

Of course, the mobile wireless communication device 100 must also include suitable program logic (in either hardware or software structure) so as to accept the incoming new random data and store it in the random pool database 300 for subsequent use. In the presently preferred exemplary embodiment, such additional program logic is included in the corresponding Cert Sync portion of the data synchronization logic. Thus a Secure Randomness Input routine at the wireless device 100 side is entered at 500 as depicted in FIG. 5. A test may be made at 502 to see if new random number data RN has been received during a Cert Sync session. If so, then such new incoming randomness is stored at 504. As previously mentioned, one or more received random data (or some combination or permutation thereof) may be stored in whole or in part in the random pool database 300 so as to increase its effective randomness. The sub-routine is then exited at 506 in FIG. 5.

In this current preferred exemplary implementation, device 100 and base unit 24 connect and synchronize data normally. However, during the synchronization process, a component of the desktop generates new random data. As previously mentioned, this can be done in multiple ways:
a. By using a software random number generator on the base unit 24 it is running on.
b. By querying a hardware random number generator connected to the base unit 24 it is running on.
c. By querying a URL, preferably over TLS/SSL for security, that has access to some source of random data.
d. Any other desired way.

The base unit 24 then transmits this new random data to the device 100 through the normal data synchronization process. The device 100 accepts such incoming random data and adds it to its own pool of random data. This pool of random data is used to help seed the devices random number generator and thus provide it with more randomness or "entropy".

While the invention has been described in connection with what is presently considered to be the most practical and preferred exemplary embodiments, it is to be understood that the invention is not to be limited to the disclosed embodiments but, on the contrary, is intended to cover all variations, medications and equivalent arrangements included within scope of the appended claims.

## Claims

1. A wireless communication device (100) configured to implement cryptographic functions utilizing random data input, the device comprising:
a secure data input port (118) for receiving random data from a treated base computer (24);
a random pool database (300) configured to store random data for subsequent device operation;
a control processor (106) configured to store random data in said random pool database based on input data securely received via said input port (118) from the trusted base computer (24), **characterised by** said control processor (106) being configured to add randomness to said random pool database (300) by storing added new random data therein each time the device is connected for data synchronisation with the trusted base computer.

2. A wireless communication device as in claim 1 wherein the new random data received from the trusted base computer (24) is generated by a trusted source (310) connected to the trusted base computer (24).

3. A wireless communication device as in claim 1 wherein said new random data is a combination or permutation of plural random data obtained by the trusted base computer (24) from at least one of the following sources:
a software random number generator (306);
a hardware random number generator (308); or
a remote secure website (310).

4. A wireless communication device as in claim 1 wherein said device further comprises:
a random data generator configured to accept random number seed input from said random pool database.

5. A wireless communication device as in claim 1 wherein said secure data input port comprises a wired connector suited for wired connection to a user's own trusted computer.

6. A wireless communication device as in claim 1 wherein said secure data input port comprises an encrypted wireless input communications channel.

7. A wireless communication device as in claim 1 wherein said secure data input port comprises:
a wired connector suited for wired connection to a user's own trusted computer; and
an encrypted wireless input communications, channel.

8. A method comprising:
storing random data in a random pool database (300) of a wireless communication device (100) having a secure data input port (118) for receiving random data from a trusted base computer (24); and
adding randomness to the random pool database by storing added new random data received from the trusted base computer (24) in said random pool database based on new input data securely received via said input port (118) each time the device is connected for data synchronization with the trusted base computer.

9. A method as in claim 8 wherein the added new random data received from the trusted base computer (24) is generated by a trusted source (310) connected to the trusted base computer (24).

10. A method as in claim 8 wherein said new random data is a combination or permutation of plural random data obtained by the trusted base computer (24) from at least one of the following sources:
a software random number generator (306);
a hardware random number generator (308); or
a remote secure website (310).

11. A method as in claim 8 wherein said method further comprises:
accepting random number seed data into a random data generator from said random pool database.

12. A method as in claim 8 wherein said secure data input port provision comprises establishing a wired connection to a user's own trusted computer.

13. A method as in claim 8 wherein said secure data input port comprise establishing encrypted wireless input communications channel.

14. A method as in claim 8 wherein said secure data input port comprises:
establishing a wired connection to a user's own trusted computer; and
establishing an encrypted wireless input communications channel.

15. A computer program medium having stored therein a computer program which, when executed, in a wireless communication device (100) configured to implement cryptographic functions utilizing random data input causes:
storage of new random data in a random pool database (300) of said wireless device based on new data securely received via a secure data input port (118) from a trusted base computer (24), as needed for subsequent device operation; and
adding randomness to the random pool database by storing added new random data in said random data pool database (118), each time the device is connected for data synchronisation with the trusted base computer,

16. A computer program medium, as in claim 15, wherein said program, when executed, causes said new random data to replace entirely the random data previously stored in said random pool database.

17. A computer program medium as in claim 15, wherein said new random data is a combination or permutation of plural random data obtained by the trusted base computer (24) from at least one of the following sources:
a software random number generator (306);
a hardware random number generator (308); or
a remote secure website (310).

18. A base system (24) comprising: a secure input/output data port (72) for use with a wireless communication device (100), said base system being
**characterized by**:
a control processor (24) configured to provide new random data to be added to a random pool database (300) in said wireless communication device (100) via said secure input/output data port each time the device is securely connected for data synchronisation with the base system.

19. A base system as in claim 18 wherein said secure input/output data port includes a trusted wired connection.

20. A base system as in claim 18, wherein said secure input/output data port includes a cryptographically secured wireless communication link.

21. A base system as in claim 18 wherein said control processor is configured to generate said new random data from a software random number generator (306) accessible to said control processor.

22. A base system as in claim 18 wherein said control processor is configured to generate said new random data from a hardware random number generator (308) accessible to said control processor.

23. A base system as in claim 18 wherein said control processor is configured to fetch new random data from a securely maintained and accessible external network site (310).

24. A base system as in claim 19 wherein said control processor is configured to generate said new random data from a hardware random number generator (308) accessible to said control processor.

25. A base system as in claim 19 wherein said control processor is configured to fetch new random data from a securely maintained and accessible external network site (310).

26. A base system as in claim 18 wherein said control processor is configured to obtain said new random data from at least one of the following sources, if accessible:
a software random number generator (306);
a hardware random number generator (308); or
a remote secure website (310),

27. A base system as in claim 26, wherein said control processor is configured to obtain said new random data using as many of said sources as are then accessible.

28. A base system as in claim 26 wherein said new random data is a combination or permutation of plural random data obtained from plural of said sources.

29. A method for operating a base system (24) with a secure input/output data port for use with a wireless communication device (100) including implementation of cryptographic functions utilizing random input data, said method comprising:
sending new random data to said wireless communication device via said secure input/output data port (118,102) for addition to a random pool database (300) in said wireless communication device (100) each time the device is connected for data synchronisation with the base system.

30. A method as in claim 29 wherein said secure input/output data port includes a trusted wired connection.

31. A method as in claim 29 wherein said secure input/output data port includes a cryptographically secured wireless communication link.

32. A method as in claim 29 wherein said new random data is generated using a software random number generator (306).

33. A method as in claim 29 wherein said new random data is generated using a hardware random number generator (308).

34. A method as in claim 29 wherein said new random data is generated using a securely maintained and accessible external network site (310).

35. A method as in claim 32 wherein said new random data is generated in conjunction with a hardware random number generator (308).

36. A method as in claim 32 wherein said new random data is generated in conjunction with a securely maintained and accessible external network site (310).

37. A method as in claim 29 wherein said new random data is obtained from at least one of the following sources, if accessible:
a software random number generator (306);
a hardware random number generator (308); or
a remote secure website (310).

38. A method as in claim 37 wherein said new random data is generated using as many of said sources as are then accessible.

39. A method as in claim 38 wherein said new random data is generated by combining or permuting plural random data obtained from plural of said sources.

40. A computer program medium having stored therein a computer program, which when executed, in a base system (24) causes:
new random data to be generated and sent to be added to a random pool database (300) in a wireless communication device (100) each time the wireless communication device is connected for data synchronisation with the base system via a secure input/output port (118).

41. A computer program medium as in claim 40 wherein said new random data is generated using a software random number generator (306).

42. A computer program medium as in claim 40 wherein said new random data is generated using a hardware random number generator (308).

43. A computer program medium as in claim 40 wherein said new random data is fetched from a securely maintained and accessible external network site (310).

44. A computer program medium as in claim 41 wherein said new random data is generated in conjunction with a hardware random number generator (308).

45. A computer program medium as in claim 41 wherein said new random data is generated in conjunction with a securely maintained and accessible external network site (310).

46. A computer program medium as in claim 40 wherein said new ransom data is obtained from at least one of the following sources, if accessible:
a software random number generator (306);
a hardware random number generator (308); or
a remote secure website (310).

47. A computer program medium as in claim 46 wherein said new random data is obtained using as many of said sources as are then accessible.

48. A computer program medium as in claim 47 wherein said new random data is a combination or permutation of plural random data obtained from plural of said sources.

49. A wireless communication system comprising:
a mobile wireless communication device (100) configured to implement cryptographic functions utilizing random data input, said device including:
a random pools database (300) configured to store random data for subsequent device operation;
a secure data input port (118); and
a control processor (106) configured to store random data for subsequent device operation in said random pool database (300) based on new data securely received via said input port (118,102) from a trusted base sub-system (24), the control processor being configured to add randomness to the random pool database by storing added new random data therein, each time the device is connected for synchronisation with the trusted base sub-system, and
the trusted base sub-system (24) for use with said wireless communication device (100), said base sub-system including:
a secure input/output data port; and
a control processor configured to provide new random data to said random pool database (300) in said wireless communication device (100) via said secure input/output data port each time the device is connected for data synchronisation with said base sub-system.

50. A method for operating a wireless communication system comprising a mobile wireless communication device (100) configured to implement cryptographic functions utilizing random data input, said device having a random pool database (300) having random data stored therein for subsequent device operation and a secure data input port (118); and a base sub-system (24) having a secure input/output data port for use with said wireless communication device, said method comprising:
adding new random data in said random pool database (300) based on new data securely received via said input port each time the device is connected for synchronisation with a trusted base sub-system;
sending new random data to said random pool database in said wireless communication device via said secure input/output data port each time the device is connected for synchronisation to the trusted base sub-system.

## Patentansprüche

1. Drahtlose Kommunikationsvorrichtung (100), die konfiguriert ist zur Implementierung von kryptographischen Funktionen, die eine Zufallsdateneingabe benutzen, wobei die Vorrichtung aufweist:
einen sicheren Dateneingabeanschluss (118) zum Empfangen von Zufallsdaten von einem vertrauenswürdigen Basiscomputer (24);
eine Zufallspooldatenbank (300), die konfiguriert ist zum Speichern von Zufallsdaten für eine nachfolgende Vorrichtungsoperation;
einen Steuerungsprozessor (106), der konfiguriert ist zum Speichern von Zufallsdaten in der Zufallspooldatenbank basierend auf Eingabedaten, die sicher empfangen werden über den Eingabeanschluss (118) von dem vertrauenswürdigen Basiscomputer (24), **dadurch gekennzeichnet, dass** der Steuerungsprozessor (106) konfiguriert ist, eine Zufälligkeit zu der Zufallspooldatenbank (300) hinzuzufügen durch Speichern hinzugefügter neuer Zufallsdaten jedes Mal, wenn die Vorrichtung für eine Datensynchronisierung mit dem vertrauenswürdigen Basiscomputer verbunden wird.

2. Drahtlose Kommunikationsvorrichtung gemäß Anspruch 1, wobei die neuen Zufallsdaten, die von dem vertrauenswürdigen Basiscomputer (24) empfangen werden, durch eine vertrauenswürdige Quelle (310) erzeugt werden, die mit dem vertrauenswürdigen Basiscomputer (24) verbunden ist.

3. Drahtlose Kommunikationsvorrichtung gemäß Anspruch 1, wobei die neuen Zufallsdaten eine Kombination oder Permutation einer Vielzahl von Zufallsdaten sind, die durch den vertrauenswürdigen Basiscomputer (24) erlangt werden von zumindest einer der folgenden Quellen:
ein Software-Zufallszahlengenerator (306):
ein Hardware-Zufallszahlengenerator (308); oder
eine entfernte sichere Website (310).

4. Drahtlose Kommunikationsvorrichtung gemäß Anspruch 1, wobei die Vorrichtung weiter aufweist:
einen Zufallsdatengenerator, der konfiguriert ist, eine Zufallszahlstart(seed)eingabe aus der Zufallspooldatenbank zu akzeptieren.

5. Drahtlose Kommunikationsvorrichtung gemäß Anspruch 1, wobei der sichere Dateneingabeanschluss einen verdrahteten Verbinder aufweist, der geeignet ist für eine verdrahtete Verbindung zu dem vertrauenswürdigen Computer eines Benutzers.

6. Drahtlose Kommunikationsvorrichtung gemäß Anspruch 1, wobei der sichere Dateneingabeanschluss einen verschlüsselten drahtlosen Eingabekommunikationskanal aufweist.

7. Drahtlose Kommunikationsvorrichtung gemäß Anspruch 1, wobei der sichere Dateneingabeanschluss aufweist:
einen verdrahteten Verbinder, der geeignet ist für eine verdrahtete Verbindung zu dem vertrauenswürdigen Computer eines Benutzers; und
einen verschlüsselten drahtlosen Eingabekommunikationskanal.

8. Verfahren, das aufweist:
Speichern von Zufallsdaten in einer Zufallspooldatenbank (300) einer drahtlosen Kommunikationsvorrichtung (300) mit einem sicheren Dateneingabeanschluss (118) zum Empfangen von Zufallsdaten von einem vertrauenswürdigen Basiscomputer (24); und
Hinzufügen einer Zufälligkeit zu der Zufallspooldatenbank durch Speichern hinzugefügter neuer Zufallsdaten, die von dem vertrauenswürdigen Basiscomputer (24) empfangen werden, in der Zufallspooldatenbank basierend auf neuen Eingabedaten, die sicher empfangen werden über den Eingabeanschluss (118), jedes Mal, wenn die Vorrichtung für eine Datensynchronisierung mit dem vertrauenswürdigen Basiscomputer verbunden wird.

9. Verfahren gemäß Anspruch 8, wobei die hinzugefügten neuen Zufallsdaten, die von dem vertrauenswürdigen Basiscomputer (24) empfangen werden, durch eine vertrauenswürdige Quelle (310) erzeugt werden, die mit dem vertrauenswürdigen Basiscomputer (24) verbunden ist.

10. Verfahren gemäß Anspruch 8, wobei die neuen Zufallsdaten eine Kombination oder Permutation einer Vielzahl von Zufallsdaten sind, die durch den vertrauenswürdigen Basiscomputer (24) erlangt werden von zumindest einer der folgenden Quellen:
ein Software-Zufallszahlengenerator (306);
ein Hardware-Zufallszahlengenerator (308); oder
eine entfernte sichere Website (310).

11. Verfahren gemäß Anspruch 8, wobei das Verfahren weiter aufweist:
Akzeptieren von Zufallszahlstart(seed)daten aus der Zufallspooldatenbank in einen Zufallszahlengenerator.

12. Verfahren gemäß Anspruch 8, wobei das Vorsehen eines sicheren Dateneingabeanschlusses ein Herstellen einer verdrahteten Verbindung zu dem vertrauenswürdigen Computer eines Benutzers aufweist.

13. Verfahren gemäß Anspruch 8, wobei der sichere Dateneingabeanschluss ein Herstellen eines verschlüsselten drahtlosen Eingabekommunikationskanals aufweist.

14. Verfahren gemäß Anspruch 8, wobei der sichere Dateneingabeanschluss aufweist:
Herstellen einer verdrahteten Verbindung zu dem vertrauenswürdigen Computer eines Benutzers: und
Herstellen eines verschlüsselten drahtlosen Eingabekommunikationskanals.

15. Computerprogrammmedium, das ein Computerprogramm gespeichert hat, das bei Ausführung in einer drahtlosen Kommunikationsvorrichtung (100), die konfiguriert ist, kryptographische Funktionen zu implementieren, die eine Zufallsdateneingabe benutzen, veranlasst:
ein Speichern von neuen Zufallsdaten in einer Zufallspooldatenbank (300) der drahtlosen Kommunikationsvorrichtung basierend auf neuen Daten, die sicher empfangen werden über einen sicheren Dateneingabeanschluss (118) von einem vertrauenswürdigen Basiscomputer (24), wie erforderlich für eine nachfolgende Vorrichtungsoperation; und
ein Hinzufügen einer Zufälligkeit zu der Zufallspooldatenbank durch Speichern hinzugefügter neuer Zufallsdaten in der Zufallspooldatenbank (118) jedes Mal, wenn die Vorrichtung für eine Datensynchronisierung mit dem vertrauenswürdigen Basiscomputer verbunden wird.

16. Computerprogrammmedium gemäß Anspruch 15, wobei das Programm bei Ausführung veranlasst, dass die neuen Zufallsdaten vollständig die Zufallsdaten ersetzen, die vorher in der Zufallspooldatenbank gespeichert sind.

17. Computerprogrammmedium gemäß Anspruch 15, wobei die neuen Zufallsdaten eine Kombination oder Permutation einer Vielzahl von Zufallsdaten sind, die durch den vertrauenswürdigen Basiscomputer (24) erlangt werden von zumindest einer der folgenden Quellen:
ein Software-Zufallszahlengenerator (306);
ein Hardware-Zufallszahlengenerator (308): oder
eine entfernte sichere Website (310).

18. Basissystem (24), das aufweist: einen sicheren Eingabe/Ausgabedatenanschluss (72) zur Verwendung mit einer drahtlosen Kommunikationsvorrichtung (100), wobei das Basissystem **gekennzeichnet ist durch**:
einen Steuerungsprozessor (24), der konfiguriert ist, neue Zufallsdaten vorzusehen zum Hinzufügen zu einer Zufallspooldatenbank (300) in der drahtlosen Kommunikationsvorrichtung (100) über den sicheren Eingabe/Ausgabedatenanschluss (72) jedes Mal, wenn die Vorrichtung sicher für eine Datensynchronisierung mit dem Basissystem verbunden wird.

19. Basissystem gemäß Anspruch 18, wobei der sichere Eingabe/Ausgabedatenanschluss eine vertrauenswürdige verdrahtete Verbindung umfasst.

20. Basissystem gemäß Anspruch 18, wobei der sichere Eingabe/Ausgabedatenanschluss eine kryptographisch gesicherte drahtlose Kommunikationsverbindung umfasst.

21. Basissystem gemäß Anspruch 18, wobei der Steuerungsprozessor konfiguriert ist, die neuen Zufallsdaten aus einem Software-Zufallszahlengenerator (306) zu erzeugen, auf den der Steuerungsprozessor zugreifen kann.

22. Basissystem gemäß Anspruch 18, wobei der Steuerungsprozessor konfiguriert ist, die neuen Zufallsdaten aus einem Hardware-Zufallszahlengenerator (308) zu erzeugen, auf den der Steuerungsprozessor zugreifen kann.

23. Basissystem gemäß Anspruch 18, wobei der Steuerungsprozessor konfiguriert ist, neue Zufallsdaten von einer sicher geführten und zugänglichen externen Netzwerksite (310) zu erlangen.

24. Basissystem gemäß Anspruch 19, wobei der Steuerungsprozessor konfiguriert ist, die neuen Zufallsdaten aus einem Hardware-Zufallszahlengenerator (308) zu erzeugen, auf den der Steuerungsprozessor zugreifen kann.

25. Basissystem gemäß Anspruch 19, wobei der Steuerungsprozessor konfiguriert ist, neue Zufallsdaten von einer sicher geführten und zugänglichen externen Netzwerksite (310) zu erlangen.

26. Basissystem gemäß Anspruch 18, wobei der Steuerungsprozessor konfiguriert ist, die neuen Zufallsdaten aus zumindest einer der folgenden Quellen zu erlangen:
ein Software-Zufallszahlengenerator (306);
ein Hardware-Zufallszahlengenerator (308); oder
eine entfernte sichere Website (310).

27. Basissystem gemäß Anspruch 26, wobei der Steuerungsprozessor konfiguriert ist, die neuen Zufallsdaten zu erlangen unter Verwendung so vieler der Quellen, wie zugänglich sind.

28. Basissystem gemäß Anspruch 26. wobei die neuen Zufallsdaten eine Kombination oder Permutation einer Vielzahl von Zufallsdaten sind, die von einer Vielzahl der Quellen erlangt werden.

29. Verfahren zum Betreiben eines Basissystems (24) mit einem sicheren Eingabe/Ausgabedatenanschluss zur Verwendung mit einer drahtlosen Kommunikationsvorrichtung (100) mit einer Implementierung von kryptographischen Funktionen, die Zufallseingabedaten benutzen, wobei das Verfahren aufweist:
Senden neuer Zufallsdaten an die drahtlose Kommunikationsvorrichtung über den sicheren Eingabe/ Ausgabedatenanschluss (118, 102) zum Hinzufügen zu einer Zufallspooldatenbank (300) in der drahtlosen Kommunikationsvorrichtung (100) jedes Mal, wenn die Vorrichtung für eine Datensynchronisierung mit dem Basissystem verbunden wird.

30. Verfahren gemäß Anspruch 29, wobei der sichere Eingabe/Ausgabedatenanschluss eine vertrauenswürdige verdrahtete Verbindung umfasst.

31. Verfahren gemäß Anspruch 29, wobei der sichere Eingabe/Ausgabedatenanschluss eine kryptographisch gesicherte drahtlose Kommunikationsverbindung umfasst.

32. Verfahren gemäß Anspruch 29, wobei die neuen Zufallsdaten erzeugt werden unter Verwendung eines Software-Zufallszahlengenerators (306).

33. Verfahren gemäß Anspruch 29, wobei die neuen Zufallsdaten erzeugt werden unter Verwendung eines Hardware-Zufallszahlengenerators (308).

34. Verfahren gemäß Anspruch 29. wobei die neuen Zufallsdaten erzeugt werden unter Verwendung einer sicher geführten und zugänglichen externen Netzwerksite (310).

35. Verfahren gemäß Anspruch 32, wobei die neuen Zufallsdaten erzeugt werden in Verbindung mit einem Hardware-Zufallszahlengenerator (308).

36. Verfahren gemäß Anspruch 32. wobei die neuen Zufallsdaten erzeugt werden in Verbindung mit einer sicher geführten und zugänglichen externen Netzwerksite (310).

37. Verfahren gemäß Anspruch 29, wobei die neuen Zufallsdaten erlangt werden von zumindest einer der folgenden Quellen, wenn zugänglich:
ein Software-Zutallszahlengenerator (306);
ein Hardware-Zufallszahlengenerator (308): oder
eine entfernte sichere Website (310).

38. Verfahren gemäß Anspruch 37, wobei die neuen Zufallsdaten erzeugt werden unter Verwendung so vieler der Quellen, wie dann zugänglich sind.

39. Verfahren gemäß Anspruch 38. wobei die neuen Zufallsdaten erzeugt werden durch Kombinieren oder Permutieren einer Vielzahl von Zufallsdaten, die von einer Vielzahl der Quellen erlangt werden.

40. Computerprogrammmedium, das ein Computerprogramm gespeichert hat, das bei Ausführung in einem Basissystem (24) veranlasst:
dass neue Zufallsdaten erzeugt werden und gesendet werden zum Hinzufügen zu einer Zufallspooldatenbank (300) in einer drahtlosen Kommunikationsvorrichtung (100) jedes Mal, wenn die drahtlose Kommunikationsvorrichtung für die Datensynchronisierung mit dem Basissystem über einen sicheren Eingabe/Ausgabeanschluss (118) verbunden wird.

41. Computerprogrammmedium gemäß Anspruch 40, wobei die neuen Zufallsdaten erzeugt werden unter Verwendung eines Software-Zufallszahlengenerators (306).

42. Computerprogrammedium gemäß Anspruch 40. wobei die neuen Zufallsdaten erzeugt werden unter Verwendung eines Hardware-Zufallszahlengenerators (308).

43. Computerprogrammmedium gemäß Anspruch 40, wobei die neuen Zufallsdaten erlangt werden von einer sicher geführten und zugänglichen externen Netzwerksite (310).

44. Computerprogrammmedium gemäß Anspruch 41, wobei die neuen Zufallsdaten erzeugt werden in Verbindung mit einem Hardware-Zufallszahlengenerator (308).

45. Computerprogrammmedium gemäß Anspruch 41, wobei die neuen Zufallsdaten erzeugt werden in Verbindung mit einer sicher geführten und zugänglichen externen Netzwerksite (310).

46. Computerprogrammmedium gemäß Anspruch 40, wobei die neuen Zufallsdaten erlangt werden von zumindest einer der folgenden Quellen, wenn zugänglich:
ein Software-Zufallszahlengenerator (306);
ein Hardware-Zufallszahlengenerator (308); oder
eine entfernte sichere Website (310).

47. Computerprogrammmedium gemäß Anspruch 46, wobei die neuen Zufallsdaten erlangt werden unter Verwendung so vieler der Quellen, wie dann zugänglich sind.

48. Computerprogrammmedium gemäß Anspruch 47, wobei die neuen Zufallsdaten eine Kombination oder Permutation einer Vielzahl von Zufallsdaten sind, die von einer Vielzahl der Quellen erlangt werden.

49. Drahtloses Kommunikationssystem, das aufweist:
eine mobile drahtlose Kommunikationsvorrichtung (100), die konfiguriert ist zur Implementierung von kryptographischen Funktionen, die eine Zufallsdateneingabe benutzen, wobei die Vorrichtung aufweist:
eine Zufallspooldatenbank (300), die konfiguriert ist zum Speichern von Zufallsdaten für eine nachfolgende Vorrichtungsoperation;
einen sicheren Dateneingabeanschluss (118); und
einen Steuerungsprozessor (106), der konfiguriert ist zum Speichern von Zufallsdaten für eine nachfolgende Vorrichtungsoperation in der Zufallspooldatenbank (300) basierend auf neuen Daten, die sicher empfangen werden über den Eingabeanschluss (118, 102) von einem vertrauenswürdigen Basisteilsystem (24), wobei der Steuerungsprozessor (106) konfiguriert ist eine Zufälligkeit zu der Zufallspooldatenbank hinzuzufügen durch Speichern hinzugefügter neuer Zufallsdaten jedes Mal, wenn die Vorrichtung für eine Synchronisierung mit dem vertrauenswürdigen Basisteilsystem verbunden wird, und
das vertrauenswürdige Basisteilsystem (24) zur Verwendung mit der drahtlosen Kommunikationsvorrichtung (100) wobei das Basisteilsystem umfasst:
einen sicheren Eingabe/Ausgabedatenanschluss; und
einen Steuerungsprozessor, der konfiguriert ist, neue Zufallsdaten an die Zufallspooldatenbank (300) in der drahtlosen Kommunikationsvorrichtung (100) über den sicheren Eingabe/Ausgabedatenanschluss jedes Mal zu liefern wenn die Vorrichtung für eine Datensynchronisierung mit dem Basisteilsystem verbunden wird.

50. Verfahren zum Betreiben eines drahtlosen Kommunikationssystems, das eine mobile drahtlose Kommunikationsvorrichtung (100) aufweist, die konfiguriert ist zur Implementierung von kryptographischen Funktionen, die eine Zufallsdateneingabe benutzen, wobei die Vorrichtung eine Zufallspooldatenbank (300) mit darin gespeicherten Zufallsdaten für eine nachfolgende Vorrichtungsoperation und einen sicheren Dateneingabeanschluss (118) aufweist:
und ein Basisteilsystem (24) mit einem sicheren Eingabe/Ausgabedatenanschluss zur Verwendung mit der drahtlosen Kommunikationsvorrichtung, wobei das Verfahren aufweist:
Hinzufügen neuer Zufallsdaten in die Zufallspooldatenbank (300) basierend auf neuen Daten. die sicher empfangen werden über den Eingabeanschluss jedes Mal. wenn die Vorrichtung zur Synchronisierung mit einem vertrauenswürdigen Basisteilsystem verbunden wird;
Senden neuer Zufallsdaten an die Zufallspooldatenbank in der drahtlosen Kommunikationsvorrichtung über den sicheren Eingabe/Ausgabedatenanschluss jedes Mal, wenn die Vorrichtung zur Synchronisierung mit dem vertrauenswürdigen Basisteilsystem verbunden wird.

## Revendications

1. Dispositif de communication (100) sans fil configuré pour exécuter des fonctions cryptographiques utilisant une entrée de données aléatoires, le dispositif comportant :
un port (118) d'entrée de données sécurisé destiné à recevoir des données aléatoires provenant d'un ordinateur de base fiabilisé (24) ;
une base de données de groupement aléatoire (300) configurée pour stocker des données aléatoires pour une opération subséquente du dispositif ;
un processeur de commande (106) configuré pour stocker des données aléatoires dans ladite base de données de groupements aléatoires sur la base de données d'entrée reçues de façon sûre en passant par ledit port d'entrée (118) depuis l'ordinateur de base fiabilisé (24),
**caractérisé en ce que** ledit processeur de commande (106) est configuré pour ajouter un caractère aléatoire à ladite base de données de groupements aléatoires (300) en y stockant de nouvelles données aléatoire ajoutées à chaque fois que le dispositif est connecté pour une synchronisation de données à l'ordinateur de base fiabilisé.

2. Dispositif de communication sans fil selon la revendication 1, dans lequel les nouvelles données aléatoires reçues de l'ordinateur de base fiabilisé (24) sont générées par une source fiabilisée (310) connectée à l'ordinateur de base fiabilisé (24).

3. Dispositif de communication sans fil selon la revendication 1, dans lequel lesdites nouvelles données aléatoires constituent une combinaison ou une permutation de plusieurs données aléatoires obtenues par l'ordinateur de base fiabilisé (24) à partir d'au moins l'une des sources suivantes :
un générateur logiciel (306) de nombres aléatoires ;
un générateur matériel (308) de nombres aléatoires ;
ou
un site web sécurisé distant (310).

4. Dispositif de communication sans fil selon la revendication 1, lequel dispositif comporte en outre :
un générateur de données aléatoires configurées pour accepter une entrée de germe de nombres aléatoires provenant de ladite base de données de groupements aléatoires.

5. Dispositif de communication sans fil selon la revendication 1, dans lequel ledit port d'entrée de données sécurisé comprend un connecteur câblé adapté à une connexion câblée sur un ordinateur fiabilisé qui est la propriété d'un utilisateur.

6. Dispositif de communication sans fil selon la revendication 1, dans lequel ledit port d'entrée de données sécurisé comprend un canal de communications d'entrée sans fil, crypté.

7. Dispositif de communication sans fil selon la revendication 1, dans lequel ledit port d'entrée de données sécurisé comprend :
un connecteur câblé adapté à une connexion câblée sur un ordinateur fiabilisé qui est la propriété d'un utilisateur ; et
un canal crypté de communications d'entrée sans fil.

8. Procédé comprenant :
le stockage de données aléatoires dans une base de données de groupements aléatoires (300) d'un dispositif (100) de communication sans fil ayant un port (118) d'entrée de données sécurisé pour la réception de données aléatoires provenant d'un ordinateur de base fiabilisé (24) ; et
l'addition d'un caractère aléatoire à la base de données de groupement aléatoire en stockant de nouvelles données aléatoires ajoutées, reçues de l'ordinateur de base fiabilisé (24) dans ladite base de données de groupement aléatoire sur la base de nouvelles données d'entrée reçues de façon sécurisée en passant par ledit port d'entrée (118) à chaque fois que le dispositif est connecté pour une synchronisation de données avec l'ordinateur de base fiabilisé.

9. Procédé selon la revendication 8, dans lequel les nouvelles données aléatoires ajoutées reçues de l'ordinateur de base fiabilisé (24) sont générées par une source fiabilisée (310) connectée à l'ordinateur de base fiabilisé (24).

10. Procédé selon la revendication 8, dans lequel lesdites nouvelles données aléatoires constituent une combinaison ou une permutation de multiples données aléatoires obtenues par l'ordinateur de base fiabilisé (24) à partir d'au moins l'une des sources suivantes :
un générateur logiciel (306) de nombres aléatoires ;
un générateur matériel (308) de nombres aléatoires ; ou
un site web sécurisé distant (310).

11. Procédé selon la revendication 8, lequel procédé comprend en outre :
l'acceptation de données de germe de nombres aléatoires dans un générateur de données aléatoires en provenance de ladite base de données de groupement aléatoire.

12. Procédé selon la revendication 8, dans lequel la présence dudit port d'entrée de données sécurisé comprend l'établissement d'une connexion câblée sur un ordinateur fiabilisé qui est la propriété d'un utilisateur.

13. Procédé selon la revendication 8, dans lequel ledit port d'entrée de données sécurisé comprend l'établissement d'un canal crypté de communications d'entrée sans fil.

14. Procédé selon la revendication 8, dans lequel ledit port d'entrée de données sécurisé comprend :
l'établissement d'une connexion câblée sur un ordinateur fiabilisé qui est la propriété d'un utilisateur ; et
l'établissement d'un canal crypté de communication d'entrée sans fil.

15. Support à programme d'ordinateur dans lequel est stocké un programme d'ordinateur qui, lorsqu'il est exécuté dans un dispositif (100) de communication sans fil configuré pour remplir des fonctions cryptographiques utilisant une entrée de données aléatoires, provoque :
le stockage de nouvelles données aléatoires dans une base de données de groupement aléatoire (300) dudit dispositif sans fil sur la base de nouvelles données reçues de façon sécurisée en passant pas un port d'entrée (118) de données sécurisé en provenance d'un ordinateur de base fiabilisé (24), selon ce qui est nécessité pour une opération subséquente du dispositif ; et
l'addition d'un caractère aléatoire à la base de données de groupement aléatoire par le stockage de nouvelles données aléatoires ajoutées dans ladite base de données de groupement de données aléatoires, à chaque fois que le dispositif est connecté pour une synchronisation de données à l'ordinateur de base fiabilisé.

16. Support à programme d'ordinateur selon la revendication 15, dans lequel ledit programme, lorsqu'il est exécuté, amène lesdites nouvelles données aléatoires à remplacer entièrement les données aléatoires précédemment stockées dans ladite base de données de groupement aléatoire.

17. Support à programme d'ordinateur selon la revendication 15, dans lequel lesdites nouvelles données aléatoires constituent une combinaison ou une permutation de plusieurs données aléatoires obtenues par l'ordinateur de base fiabilisé (24) à partir d'au moins l'une des sources suivantes :
un générateur logiciel (306) den ombres aléatoires ;
un générateur matériel (308) de nombres aléatoires ;
ou
un site web sécurisé distant (310).

18. Système de base (24) comportant : un port de données d'entrée/sortie sécurisé pour une utilisation avec un dispositif (100) de communication sans fil, ledit système de base étant **caractérisé par** :
un processeur (24) de commande configuré pour produire de nouvelles données aléatoires devant être ajoutées à une base de donnée de groupement aléatoire (300) dans ledit dispositif (100) de communication sans fil en passant par ledit port de données d'entrée/sortie sécurisé à chaque fois que le dispositif est connecté de façon sûre pour une synchronisation de données avec le système de base.

19. Système de base selon la revendication 18, dans lequel ledit port de données d'entrée/sortie sécurisé comprend une connexion câblée fiabilisée.

20. Système de base selon la revendication 18, dans lequel ledit port de données d'entrée/sortie sécurisé comprend une liaison de communication sans fil sécurisée par cryptographie.

21. Système de base selon la revendication 18, dans lequel ledit processeur de commande est configuré pour générer lesdites nouvelles données aléatoires à partir d'un générateur logiciel (306) de nombres aléatoires accessibles audit processeur de commande.

22. Système de base selon la revendication 18, dans lequel ledit processeur de commande est configuré pour générer lesdites nouvelles données aléatoires à partir d'un générateur matériel (308) de nombres aléatoires accessibles audit processeur de commande.

23. Système de base selon la revendication 18, dans lequel ledit processeur de commande est configuré pour extraire de nouvelles données aléatoires d'un site (310) de réseau externe maintenu et accessible de façon sécurisée.

24. Système de base selon la revendication 19, dans lequel ledit processeur de commande est configuré pour générer lesdites nouvelles données aléatoires à partir d'un générateur matériel (308) de nombres aléatoires accessible audit processeur de commande.

25. Système de base selon la revendication 19, dans lequel ledit processeur de commande est configuré pour extraire de nouvelles données aléatoires à partir d'un site de réseau externe (310) maintenu et accessible de façon sécurisée.

26. Système de base selon la revendication 18, dans lequel ledit processeur de commande est configuré pour obtenir lesdites nouvelles données aléatoires à partir d'au moins l'une des sources suivantes, si elle est accessible :
un générateur logiciel (306) de nombres aléatoires ;
un générateur matériel (308) de nombres aléatoires ; ou
un site web sécurisé distant (310).

27. Système de base selon la revendication 26, dans lequel ledit processeur de commande est configuré pour obtenir lesdites nouvelles données aléatoires en utilisant autant desdites sources qu'il y en a alors d'accessibles.

28. Système de base selon la revendication 26, dans lequel lesdites nouvelles données aléatoires comprennent une combinaison ou une permutation de plusieurs données aléatoires obtenues à partir de plusieurs desdites sources.

29. Procédé pour la mise en oeuvre d'un système de base (24) avec un port de données d'entrée/sortie sécurisé pour une utilisation avec dispositif (100) de communication sans fil comprenant l'exécution de fonctions cryptographiques utilisant des données d'entrées aléatoires, ledit procédé comprenant :
l'envoi de nouvelles données aléatoires audit dispositif de communication sans fil en passant par ledit port (118, 102) de données d'entrée/sortie sécurisé pour une addition à une base de données de groupement aléatoire (300) dans ledit dispositif (100) de communication sans fil à chaque fois que le dispositif est connecté pour une synchronisation de donnée avec le système de base.

30. Procédé selon la revendication 29, dans lequel ledit port de données d'entrée/sortie sécurisé comprend une connexion câblée fiabilisée.

31. Procédé selon la revendication 29, dans lequel ledit port de données d'entrée/sortie fiabilisées comprend une liaison de communication sans fil sécurisée par cryptographie.

32. Procédé selon la revendication 29, dans lequel lesdites nouvelles données aléatoires sont générées en utilisant un générateur logiciel (306) de nombres aléatoires.

33. Procédé selon la revendication 29, dans lequel lesdites nouvelles aléatoires sont générées en utilisant un générateur matériel (308) de nombres aléatoires.

34. Procédé selon la revendication 29, dans lequel lesdites nouvelles données aléatoires sont générées en utilisant un site de réseau externe (310) maintenu et accessible de façon sécurisée.

35. Procédé selon la revendication 32, dans lequel lesdites nouvelles données aléatoires sont générées conjointement avec un générateur matériel (308) de nombres aléatoires.

36. Procédé selon la revendication 32, dans lequel lesdites nouvelles données aléatoires sont générées conjointement avec un site de réseau externe (310) maintenu et accessible de façon sécurisée.

37. Procédé selon la revendication 29, dans lequel lesdites nouvelles données aléatoires sont obtenues à partir d'au moins l'une des sources suivantes, si elle est accessible :
un générateur logiciel (306) de nombres aléatoires ;
un générateur matériel (308) de nombres aléatoires ; ou
un site web sécurisé distant (310).

38. Procédé selon la revendication 37, dans lequel lesdites nouvelles données aléatoires sont générées en utilisant autant desdites sources qu'il y en a d'accessibles.

39. Procédé selon la revendication 38, dans lequel lesdites nouvelles données aléatoires sont générées en combinant ou permutant plusieurs données aléatoires obtenues à partir de plusieurs desdites sources.

40. Support de programme d'ordinateur dans lequel est stocké un programme d'ordinateur qui, lorsqu'il est exécuté dans un système de base (24), provoque :
la génération de nouvelles données aléatoires et leur envoi afin qu'elles soient ajoutées à une base de données de groupement aléatoire (300) dans un dispositif (100) de communication sans fil à chaque fois que le dispositif de communication sans fil est connecté pour une synchronisation de données avec le système de base en passant par un port (118) d'entrée/sortie sécurisé.

41. Support de programme d'ordinateur selon la revendication 40, dans lequel lesdites nouvelles données aléatoires sont générées en utilisant un générateur logiciel (306) de nombres aléatoires.

42. Support de programme d'ordinateur selon la revendication 40, dans lequel lesdites nouvelles données aléatoires sont générées en utilisant un générateur matériel (308) de nombres aléatoires.

43. Support de programme d'ordinateur selon la revendication 40, dans lequel lesdites nouvelles données aléatoires sont extraites d'un système de réseau externe (310) maintenu et accessible de façon sécurisée.

44. Support de programme d'ordinateur selon la revendication 41, dans lequel lesdites nouvelles données aléatoires sont générées conjointement avec un générateur matériel (308) de nombres aléatoires.

45. Support de programme d'ordinateur selon la revendication 41, dans lequel lesdites nouvelles données aléatoires sont générées conjointement avec un site de réseau externe (310) maintenu et accessible de façon sécurisée.

46. Support de programme d'ordinateur selon la revendication 40, dans lequel lesdites nouvelles données aléatoires sont obtenues à partir d'au moins l'une des sources suivantes, si elle est accessible :
un générateur logiciel (306) de nombres aléatoires ;
un générateur matériel (308) de nombres aléatoires ; ou
un site web sécurisé distant (310).

47. Support de programme d'ordinateur selon la revendication 46, dans lequel lesdites nouvelles données aléatoires sont obtenues en utilisant autant desdites sources qu'il y en a alors d'accessibles.

48. Support de programme d'ordinateur selon la revendication 47, dans lequel lesdites nouvelles données aléatoires sont une combinaison ou une permutation de plusieurs données aléatoires obtenues à partir de plusieurs desdites sources.

49. Système de communication sans fil comportant :
un dispositif mobile (100) de communication sans fil configuré pour exécuter des fonctions cryptographiques utilisant une entrée de données aléatoires, ledit dispositif comprenant :
une base de données de groupement aléatoire (300) configurée pour stocker des données aléatoires pour une opération subséquente du dispositif ;
un port d'entrée de données sécurisé (118) ; et
un processeur de commande (106) configuré pou stocker des données aléatoires pour une opération subséquente du dispositif dans ladite base de données de groupement aléatoire (300) sur la base de nouvelles données reçues de façon sécurisée depuis un sous-système de base fiabilisé (24) en passant par ledit port d'entrée (118, 102), le processeur de commande étant configuré pour ajouter un caractère aléatoire à la base de données de groupement aléatoire en y stockant de nouvelles données aléatoires ajoutées, à chaque fois que le dispositif est connecté pour une synchronisation avec le sous-système de base fiabilisé, et
le sous-système de base fiabilisé (24) est destiné à être utilisé avec ledit dispositif de communication sans fil (100), ledit sous-système de base comprenant :
un port de données d'entrée/sortie sécurisé ; et
un processeur de commande configuré pour fournir de nouvelles données aléatoires à ladite base de données de groupement aléatoire (300) dans ledit dispositif (100) de communication sans fil en passant par ledit port de donnée d'entrée/sortie sécurisé à chaque fois que le dispositif est connecté pour une synchronisation de donnée avec ledit sous-système de base.

50. Procédé pour faire fonctionner un système de communication sans fil comprenant un dispositif mobile (100) de communication sans fil configuré pour exécuter les fonctions cryptographiques en utilisant une entrée de données aléatoires, ledit dispositif ayant une base de données de groupement aléatoire (300) dans laquelle sont stockées des données aléatoires pour une opération subséquente du dispositif et un port d'entrée de données sécurisé (118) ; et un sous-système de base (24) ayant un port de données d'entrée/sortie sécurisé pour une utilisation avec ledit dispositif de communication sans fil, ledit procédé comprenant :
l'addition de nouvelles données aléatoires dans ladite base de données de groupement aléatoire (300) sur la base de nouvelles données reçues de façon sécurisée en passant par ledit port d'entrée à chaque fois que le dispositif est connecté pour une synchronisation avec un sous-système de base fiabilisé ;
l'envoi de nouvelles données aléatoires à ladite base de données de groupement aléatoire dans ledit dispositif de communication sans fil en passant par ledit port de données d'entrée/sortie sécurisé à chaque fois que le dispositif est connecté pour une synchronisation au sous-système de base fiabilisé.
